(19) **Europäisches Patentamt / European Patent Office / Office européen des brevets**

(11) **EP 2 940 858 B1**

(12) **EUROPEAN PATENT SPECIFICATION**

(45) Date of publication and mention of the grant of the patent:
**19.06.2019 Bulletin 2019/25**

(51) Int Cl.:
*H02P 21/05* (2006.01)   *H02P 21/06* (2016.01)
*H02P 6/10* (2006.01)   *B60L 15/02* (2006.01)
*B60L 15/20* (2006.01)

(21) Application number: **13869716.4**

(22) Date of filing: **22.11.2013**

(86) International application number:
**PCT/JP2013/081536**

(87) International publication number:
**WO 2014/103586 (03.07.2014 Gazette 2014/27)**

(54) **MOTOR CONTROL DEVICE AND MOTOR CONTROL METHOD**

MOTORSTEUERUNGSVORRICHTUNG UND MOTORSTEUERUNGSVERFAHREN

DISPOSITIF DE COMMANDE DE MOTEUR ET PROCÉDÉ DE COMMANDE DE MOTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2012 JP 2012287752**

(43) Date of publication of application:
**04.11.2015 Bulletin 2015/45**

(73) Proprietor: **NISSAN MOTOR CO., LTD.**
**Yokohama-shi, Kanagawa 221-0023 (JP)**

(72) Inventors:
• **USUDA, Shiho**
  **Kanagawa 243-0123 (JP)**
• **KARIKOMI, Takaaki**
  **Kanagawa 243-0123 (JP)**

(74) Representative: **Osha Liang**
**2, rue de la Paix**
**75002 Paris (FR)**

(56) References cited:
JP-A- H06 225 566    JP-A- H09 289 800
JP-A- 2003 111 213    JP-A- 2003 333 710
US-A- 5 481 168    US-A- 5 659 235
US-A1- 2002 190 683

**Description**

TECHNICAL FIELD

The present invention relates to a motor control apparatus and a motor control method.

BACKGROUND ART

In "Practical motor drive control system design and its practice" edited by Haruo NAITO, pp. 191-230, a vector control for an induction motor, in which a motor torque is controlled by adjusting a magnetic flux current and a torque current obtained by converting a three-phase AC current, which is to flow to a stator of an induction motor, into an orthogonal biaxial coordinate system synchronized with a power source angular frequency (= motor electric angular frequency + slip angle frequency), is disclosed. In a case where the slip angle frequency is controlled so as to be in proportion to a ratio of the torque current and a rotor magnetic flux, an induction motor torque is in proportion to the product of the rotor magnetic flux, which is generated with delay from the magnetic flux current, and the orthogonal torque current. Further, since the respective axes are interfered with each other, a non-interference controller that cancels an interference term is provided in order to control them independently. Furthermore, a vibration control apparatus for vehicle having electric motor is disclosed in patent document US 2002/190683.

SUMMARY OF THE INVENTION

In a case where the induction motor described in "Practical motor drive control system design and its practice" is applied to an electric vehicle, a transfer system for the torque, which leads to driving wheels from an output shaft of the motor via a drive shaft, constitutes a torsional resonance system in which the drive shaft is used as a spring element. For this reason, when an accelerator pedal is depressed rapidly at the time of quick start, quick acceleration or the like, for example, the torsional resonance system resonates due to an increase in this rapid output torque, and this may cause vehicle body vibration.

It is an object of the present invention to provide a motor control apparatus and a motor control method for suppressing torsional vibration.

A motor control apparatus and a motor control method according to the invention are defined in the appended claims. According to an embodiment, such a motor control apparatus includes: an inverter configured to apply a voltage to an AC induction motor to be driven; a command value calculator configured to calculate a command value of an AC voltage outputted from the inverter on the basis of a target motor torque of the AC induction motor; and an inverter controller configured to control the inverter on the basis of the command value of the AC voltage. The target motor torque of the AC induction motor includes a first target motor torque and a second target motor torque in which a high speed response is required in the first target motor torque in order to at least suppress torsional vibration, the second target motor torque is a lower speed response than the first target motor torque, and delay processing is carried out for the second target motor torque. The command value calculator calculates, on the basis of the target motor torque, a magnetic flux current command value in which current responsiveness is slow with respect to an input, and the command value calculator calculates, on the basis of the target motor torque and the magnetic flux current command value, a torque current command value in which current responsiveness is quicker than that of the magnetic flux current command value.

Embodiments of the present invention will be described below in detail with reference to the accompanying drawings.

BRIEF DESCRIPTION OF THE DRAWINGS

FIG. 1 is a block diagram showing a configuration of a motor control apparatus according to a first embodiment.
FIG. 2 is a drawing for explaining processing content carried out by a torque response improving arithmetic unit.
FIG. 3 is a drawing showing another configuration example of the torque response improving arithmetic unit.
FIG. 4 is a drawing showing still another configuration example of a current command value arithmetic unit and the torque response improving arithmetic unit.
FIG. 5 is a drawing showing a controlled result of the motor control apparatus shown in FIG. 1 according to the first embodiment.
FIG. 6 is a drawing showing a controlled result of a conventional motor control apparatus, in which a target motor torque is not divided into two of $T_1^*$ and $T_2^*$ and no torque response improving arithmetic unit and no filter are provided in the configuration shown in FIG. 1.

FIG. 7 is a block diagram showing a configuration of the case where the motor control apparatus is applied to a field-winding synchronous motor in which winding for causing a field current to flow is wound around the rotor.

FIG. 8 is a drawing for explaining processing content carried out by the torque response improving arithmetic unit with a configuration shown in FIG. 7.

FIG. 9 is a drawing showing another configuration example of the torque response improving arithmetic unit with the configuration shown in FIG. 7.

FIG. 10 is a drawing showing a controlled result of the motor control apparatus with the configuration shown in FIG. 7.

FIG. 11 is a drawing showing a controlled result of the conventional motor control apparatus, in which the target motor torque is not divided into two of $T_1^*$ and $T_2^*$ and no torque response improving arithmetic unit and no filter are provided in the configuration shown in FIG. 7.

FIG. 12 is a block diagram showing a main configuration of a motor control apparatus according to a second embodiment, which corresponds to FIG. 2 in the first embodiment.

FIG. 13 is a drawing showing a controlled result of the motor control apparatus according to the second embodiment.

FIG. 14 is a block diagram showing a configuration of the case where a $\gamma$-axis current command value $i_{\gamma s}^*$ outputted from a torque response improving arithmetic unit is limited to an upper limit value $i_{\gamma s\_lim}$ by a limiter.

FIG. 15 is a block diagram showing a configuration of the case where a limiter is provided in the configuration shown in FIG. 4.

FIG. 16 is a block diagram showing a main configuration of a motor control apparatus according to a third embodiment.

FIG. 17 is a drawing showing a controlled result of the motor control apparatus according to the third embodiment.

FIG. 18 is a block diagram showing a configuration of the case where a lower limit limiter is provided in the configuration shown in FIG. 4.

FIG. 19 is a block diagram showing a configuration of the case where a lower limit limiter is provided in the configuration of the field-winding synchronous motor shown in FIG. 9.

FIG. 20 is a block diagram showing a configuration of the case where a lower limit limiter is provided in another configuration of the field-winding synchronous motor.

FIG. 21 is a drawing showing a controlled result of the case where the field-winding motor is configured to output a field current if* with a slow response by a predetermined amount even though the torque command value $T_l^*$ is zero or in the vicinity of zero.

## DESCRIPTION OF THE EMBODIMENTS

(First Embodiment)

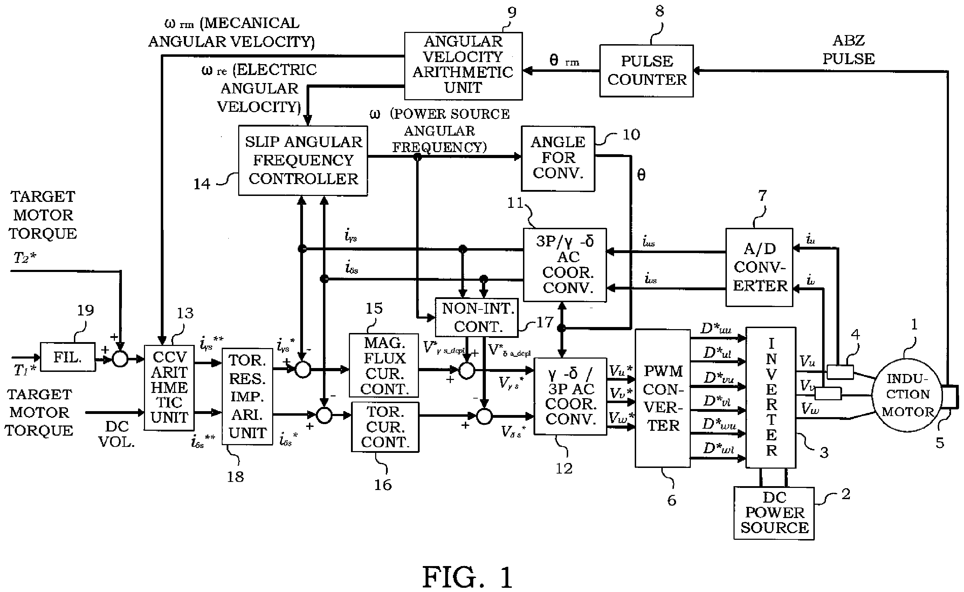

FIG. 1 is a block diagram showing a configuration of a motor control apparatus according to a first embodiment. This motor control apparatus is applied to an electric vehicle, for example. It should be noted that the motor control apparatus can be applied to a hybrid vehicle or a system other than a vehicle, for example, in addition to the electric vehicle.

A motor 1 is a three-phase AC induction motor. In a case where the motor control apparatus is applied to an electric vehicle, the motor 1 becomes a driving source of the vehicle.

A PWM convertor 6 generates PWM_Duty driving signals $D_{uu}^*$, $D_{ul}^*$, $D_{vu}^*$, $D_{vl}^*$, $D_{wu}^*$, $D_{wl}^*$ for switching elements (such as an IGBT) in a three-phase voltage type inverter 3 on the basis of three-phase voltage command values $V_u^*$, $V_v^*$, $V_w^*$.

The inverter 3 converts a DC voltage of a DC power source 2 into AC voltages $V_u$, $V_v$, $V_w$ on the basis of the driving signals generated by the PWM convertor 6, and supplies the AC voltages to the motor 1. The DC power source 2 is a stacked lithium ion battery, for example.

A current sensor 4 detects a current of each of at least two phases (for example, U-phase current $i_u$, V-phase current $i_v$) of three-phase AC currents supplied to the motor 1 from the inverter 3. The detected currents $i_u$, $i_v$ of the two phases are converted into digital signals $i_{us}$, $i_{vs}$ by an A/D converter 7, and are inputted into a three-phase/$\gamma$-$\delta$ AC coordinate converter 11. In a case where the current sensors 4 are installed for only the two phases, a current $i_{ws}$ of the remaining one phase can be obtained on the basis of the following formula (1).

[Formula 1]

$$i_{ws} = -i_{us} - i_{vs} \qquad \cdots (1)$$

A magnetic pole position sensor 5 outputs a A-phase pulse, a B-phase pulse and a Z-phase pulse according to a rotor position (angle) of the motor 1, and a rotor mechanical angle $\theta_{rm}$ is obtained through a pulse counter 8. The rotor mechanical angle $\theta_{rm}$ is inputted to an angular velocity arithmetic unit 9, and the angular velocity arithmetic unit 9 obtains, on the basis of a time change rate of the rotor mechanical angle $\theta_{rm}$, a rotor mechanical angular velocity $\omega_{rm}$, and obtains a rotor electric angular velocity $\omega_{re}$ by multiplying the rotor mechanical angular velocity $\omega_{rm}$ by a motor pole-pair number p.

A $\gamma$-$\delta$/three-phase AC coordinate converter 12 carries out conversion from an orthogonal biaxial DC coordinate system ($\gamma$-$\delta$ axes) that rotates with a power source angular velocity $\omega$ (will be described later) into a three-phase AC coordinate system (UVW axes). More specifically, a $\gamma$-axis voltage command value (magnetic flux voltage command value) $V_{\gamma s}^*$ and a $\delta$-axis voltage command value (torque voltage command value) $V_{\delta s}^*$, and a power source angle $\theta$ obtained by integrating the power source angular velocity $\omega$ are inputted to the $\gamma$-$\delta$/three-phase AC coordinate converter 12, and the $\gamma$-$\delta$/three-phase AC coordinate converter 12 carries out coordinate transforming processing based on the following formula (2) to calculate and output the voltage command values $V_u^*$, $V_v^*$, $V_w$ of the respective UVW phases. Here, $\theta'$ in the formula (2) is the same as $\theta$.

[Formula 2]

$$\begin{bmatrix} v_u^* \\ v_v^* \\ v_w^* \end{bmatrix} = \sqrt{\frac{2}{3}} \begin{bmatrix} 1 & 0 \\ -\dfrac{1}{2} & \dfrac{\sqrt{3}}{2} \\ -\dfrac{1}{2} & -\dfrac{\sqrt{3}}{2} \end{bmatrix} \begin{bmatrix} \cos\theta' & -\sin\theta' \\ \sin\theta' & \cos\theta' \end{bmatrix} \begin{bmatrix} v_\gamma^* \\ v_\delta^* \end{bmatrix} \qquad \cdots (2)$$

The three-phase/ $\gamma$-$\delta$ AC coordinate converter 11 carries out conversion from a three-phase AC coordinate system (UVW axes) into an orthogonal biaxial DC coordinate system ($\gamma$-$\delta$ axes). More specifically, a U-phase current $i_{us}$, a V-phase current $i_{vs}$ and a W-phase current $i_{ws}$, and the power source angle $\theta$ obtained by integrating the power source angular velocity $\omega$ are inputted to the three-phase/ $\gamma$-$\delta$ AC coordinate converter 11, and the three-phase/ $\gamma$-$\delta$ AC coordinate converter 11 calculates a $\gamma$-axis current (magnetic flux current) $i_{\gamma s}$ and a $\delta$-axis current (torque current) $i_{\delta s}$ on the basis of the following formula (3). A response of the $\gamma$-axis current with respect to the command value is slow, but a response of the $\delta$-axis current with respect to the command value is quick compared with the $\gamma$-axis current.

[Formula 3]

$$\begin{bmatrix} i_\gamma \\ i_\delta \end{bmatrix} = \begin{bmatrix} \cos\theta & \sin\theta \\ -\sin\theta & \cos\theta \end{bmatrix} \sqrt{\frac{2}{3}} \begin{bmatrix} 1 & -\dfrac{1}{2} & -\dfrac{1}{2} \\ 0 & \dfrac{\sqrt{3}}{2} & -\dfrac{\sqrt{3}}{2} \end{bmatrix} \begin{bmatrix} i_{us} \\ i_{vs} \\ i_{ws} \end{bmatrix} \qquad \cdots (3)$$

A target motor torque, a motor rotation number (the mechanical angular velocity $\omega_{rm}$) and a DC voltage Vdc of the DC power source 2 are inputted to a current command value arithmetic unit 13, and the current command value arithmetic unit 13 calculates a $\gamma$-axis current command value (the magnetic flux current command value) $i_{\gamma s}^{**}$ and a $\delta$-axis current command value (the torque current command value) $i_{\delta s}^{**}$. Each of the $\gamma$-axis current command value $i_{\gamma s}^{**}$ and the $\delta$-axis current command value $i_{\delta s}^{**}$ can be obtained by storing map data, which define a relationship between a group of the target motor torque, the motor rotation number (the mechanical angular velocity $\omega_{rm}$) and the DC voltage $V_{dc}$ and a group of the $\gamma$-axis current command value $i_{\gamma s}^{**}$ and the $\delta$-axis current command value $i_{\delta s}^{**}$, in a memory in advance and referring to these map data.

Here, the target motor torque inputted to the current command value arithmetic unit 13 is a torque obtained by adding a target motor torque T1*, for which time delay processing was carried out by a filter 19, to a target motor torque T2*. The target motor torque T1* is a torque command value obtained in accordance with an accelerator opening degree, and a high speed response is not required. The target motor torque T2* is a torque command value for which a high speed response is required in order to suppress torsional vibration of a driving force transfer system (drive shaft) that leads to driving wheels from the motor 1.

The filter 19 outputs the target motor torque T1* so as to be delayed at least for a period of time longer than a response time of the target motor torque T1* that is defined in accordance with the accelerator opening degree.

The $\gamma$-axis current (magnetic flux current) $i_{\gamma s}$, the $\delta$-axis current (torque current) $i_{\delta s}$ and a power source angular frequency $\omega$ are inputted to a non-interference controller 17, and the non-interference controller 17 calculates non-interference voltages $V_{\gamma s\_dcpl}^*$, $V_{\delta s\_dcpl}^*$, which are required to cancel (or offset) an interference voltage between the $\gamma$

- $\delta$ orthogonal coordinate axes, on the basis of the following formula (4).
[Formula 4]

$$v^*_{\gamma s\_dcpl} = -\omega \cdot \sigma \cdot L_s \cdot i_{\delta s}$$

$$v^*_{\delta s\_dcpl} = \omega \cdot \left( \sigma \cdot L_s \cdot i_{\gamma s} + \frac{M}{L_r} \phi_{\gamma r} \right)$$

$$※\, \phi_{\gamma r} = \frac{M}{\tau \cdot s + 1} \cdot i_{\gamma s}$$

$$\cdots (4)$$

$\dot{\omega}$ power source angular velocity

$M$: mutual inductance

$L_s$: stator side self-inductance $L_r$: rotor side self-inductance $\quad \sigma = 1 - \dfrac{M^2}{L_s \cdot L_r} \quad :$ leakage coefficient

Here, $\tau$ in the formula (4) denotes a time constant of a rotor magnetic flux, and it is a very large value compared with a time constant of a current response. Further, s denotes a Laplace operator.

A magnetic flux current controller 15 causes a $\gamma$-axis current command value (the magnetic flux current command value) $i_{\gamma s}^*$ to follow the measured $\gamma$-axis current (magnetic flux current) $i_{\gamma s}$ at desired responsiveness without steady-state deviation. Further, a torque current controller 16 causes a $\delta$-axis current command value (torque current command value) $i_{\delta s}^*$ to follow the measured $\delta$-axis current (torque current) $i_{\delta s}$ at desired responsiveness without steady-state deviation. If a control to cancel an interference voltage between the $\gamma$ - $\delta$ orthogonal coordinate axes by means of the non-interference controller 17 functions ideally, it becomes a simple control target characteristic with one input and one output. For this reason, it is possible to achieve this control with a simple PI feedback compensator. Values obtained by correcting (or adding) the respective voltage command values, which are outputs of the magnetic flux current controller 15 and the torque current controller 16 using non-interference voltages $V_{\gamma s\_dcpl}$, $V_{\delta s\_dcpl}$, which are outputs of the non-interference controller 17, are set to the $\gamma$-axis voltage command value (magnetic flux voltage command value) $V_{\gamma s}^*$ and the $\delta$-axis voltage command value (torque voltage command value) $V_{\delta s}^*$.

The $\gamma$-axis current (magnetic flux current) $i_{\gamma s}$ and the $\delta$-axis current (torque current) $i_{\delta s}$ are inputted to a slip angle frequency controller 14, and the slip angle frequency controller 14 calculates a slip angular velocity $\omega_{se}$ on the basis of the following formula (5). Here, $R_r$ and $L_r$ are parameters of the induction motor, and respectively denote rotor resistance and rotor self-inductance.
[Formula 5]

$$\omega_{se} = \frac{M \cdot R_r}{L_r} \cdot \frac{i_{\delta s}^*}{\phi_{\gamma r}} \qquad \cdots (5)$$

A value obtained by adding the slip angular velocity $\omega_{se}$ to the rotor electric angular velocity $\omega_{re}$ is set to the power source angular velocity $\omega$. By carrying out this slip angle frequency control, an induction motor torque is in proportion to the product of the $\gamma$-axis current (magnetic flux current) $i_{\gamma s}$ and the $\delta$-axis current (torque current) $i_{\delta s}$.

The control content carried out by a torque response improving arithmetic unit 18 will be described below.

A torque formula of a general induction motor is expressed by the following formula (6). Here, $K_T$ in the formula (6) denotes a coefficient determined by a parameter of the induction motor.
[Formula 6]

$$T^* = K_T \cdot \left( i_{\delta s}^* \cdot \hat{\phi}_{\gamma r} - i_{\gamma s}^* \cdot \hat{\phi}_{\delta r} \right) \qquad \cdots (6)$$

Here, by controlling the slip angle frequency as shown in the formula (5), $\Phi^{\wedge}{}_{\delta\gamma}$ can be set to zero ($\Phi^{\wedge}{}_{\delta\gamma} = 0$). Therefore, the torque formula can be expressed as a formula (7) by means of a slip angle frequency control.
[Formula 7]

$$T^* = K_T \cdot i_{\delta s}{}^* \cdot \hat{\phi}_{\gamma r} \qquad \cdots (7)$$

where $\hat{\phi}_{\gamma r} = \dfrac{M}{\tau \cdot s + 1} \cdot i_{\gamma s}{}^*$

Similarly, by carrying out a vector control, the torque formula can be dealt with as a formula (8).
[Formula 8]

$$T^* = K_T \cdot i_{\gamma s}{}^* \cdot \hat{\phi}_{\delta r} \qquad \cdots (8)$$

Although explanation based upon the formula (7) will be made below for simplification, similar effects can also be obtained by a similar configuration in the formula (8).

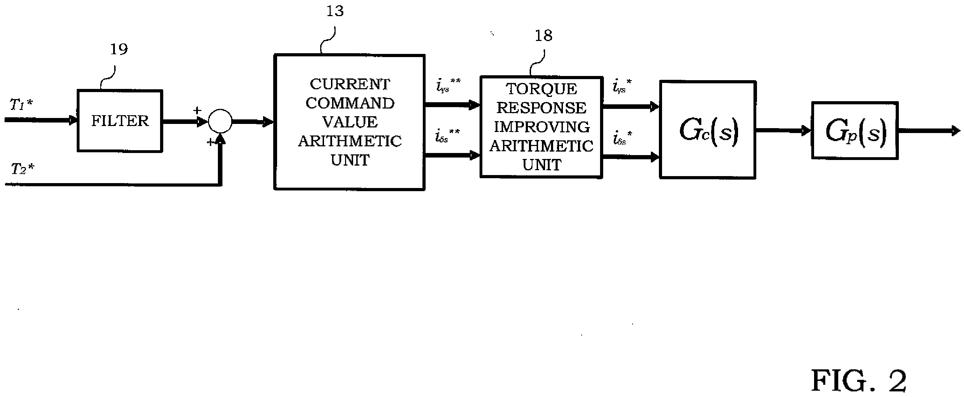

FIG. 2 is a drawing for explaining processing content carried out by the torque response improving arithmetic unit 18. The target motor torque T2* and the $\gamma$-axis current command value (the magnetic flux current command value) $i_{\gamma s}$** with a slow response are inputted to the torque response improving arithmetic unit 18, and the torque response improving arithmetic unit 18 calculates a $\delta$-axis current correction value $i_{\delta s\_T2}$ on the basis of a formula (9) obtained by deforming the formula (7). The torque response improving arithmetic unit 18 calculates the $\delta$-axis current command value (the torque current command value) $i_{\delta s}$* after correction by adding the calculated $\delta$-axis current correction value $i_{\delta s\text{-}T2}$ to the $\delta$-axis current command value (the torque current command value) $i_{\delta s}$** with a quick response. In this regard, the $\gamma$-axis current command value (the magnetic flux current command value) $i_{\gamma s}$* outputted from the torque response improving arithmetic unit 18 is the same as the $\gamma$-axis current command value (the magnetic flux current command value) $i_{\gamma s}$** inputted to the torque response improving arithmetic unit 18.
[Formula 9]

$$i_{\delta s\_T_2} = \frac{T_2{}^*}{K_{Te} \cdot \hat{\phi}_{\gamma r}} \qquad \cdots (9)$$

where $\hat{\phi}_{\gamma r} = \dfrac{M}{\tau \cdot s + 1} \cdot i_{\gamma s}{}^*$

In this regard, in FIG. 2, Gp(s) denotes the induction motor 1, and Gc(s) denotes a control model that expresses a control block that exists between the torque response improving arithmetic unit 18 and the induction motor 1.

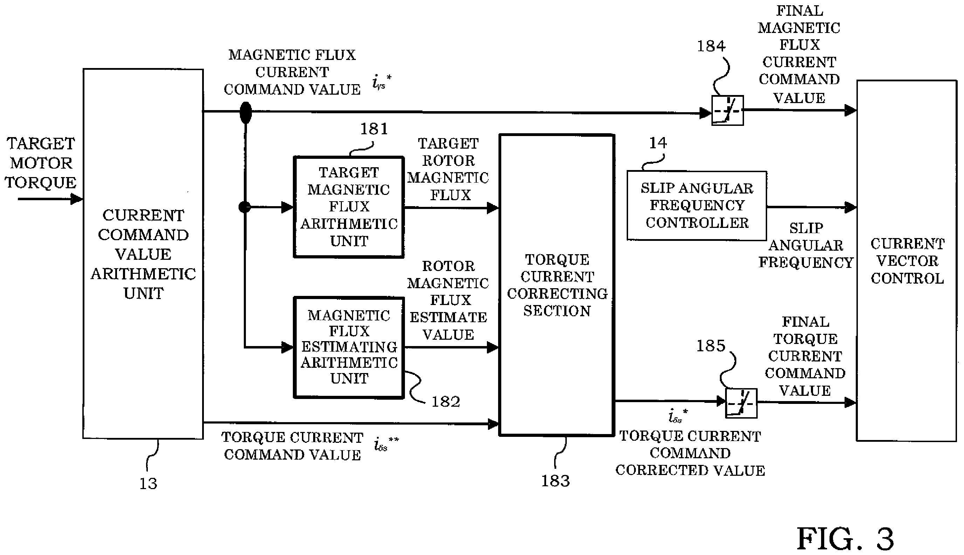

FIG. 3 is a drawing showing another configuration example of the torque response improving arithmetic unit 18. In the configuration shown in FIG. 3, the torque response improving arithmetic unit 18 includes a target magnetic flux arithmetic unit 181, a magnetic flux estimating arithmetic unit 182, and a torque current correcting section 183.

The target magnetic flux arithmetic unit 181 obtains a target rotor magnetic flux $\Phi^*{}_{\gamma r}$ on the basis of the following formula (10). Further, the magnetic flux estimating arithmetic unit 182 obtains a rotor magnetic flux estimate value $\Phi^{\wedge}{}_{\gamma r}$ on the basis of the following formula (11).
[Formula 10]

$$\phi_{\gamma r}{}^* = M_c \cdot i_{\gamma s}{}^* \qquad \cdots (10)$$

[Formula 11]

$$\phi_{\gamma r}{}^{\wedge} = \frac{M_C}{\tau \cdot s + 1} \cdot i_{\gamma s}{}^* \qquad \cdots (11)$$

The torque current correcting section 183 obtains a $\delta$-axis current command value (the torque current command value) $i_{\delta s}{}^*$ after correction on the basis of the target rotor magnetic flux $\Phi^*_{\gamma r}$ obtained by the target magnetic flux arithmetic unit 181 and the rotor magnetic flux estimate value $\Phi^\wedge_{\gamma r}$ obtained by the magnetic flux estimating arithmetic unit 182. For example, the $\delta$-axis current command value $i_{\delta s}{}^*$ after correction is obtained by multiplying a ration of the target rotor magnetic flux $\Phi^*_{\gamma r}$ and the rotor magnetic flux estimate value $\Phi^\wedge_{\gamma r}$ by the $\delta$-axis current command value $i_{\delta s}{}^{**}$.

In this regard, an upper limit of the $\gamma$-axis current command value $i_{\gamma s}{}^*$ is limited by an upper limit limiter 184, and an upper limit of the $\delta$-axis current command value $i_{\delta s}{}^*$ is limited by an upper limit limiter 185.

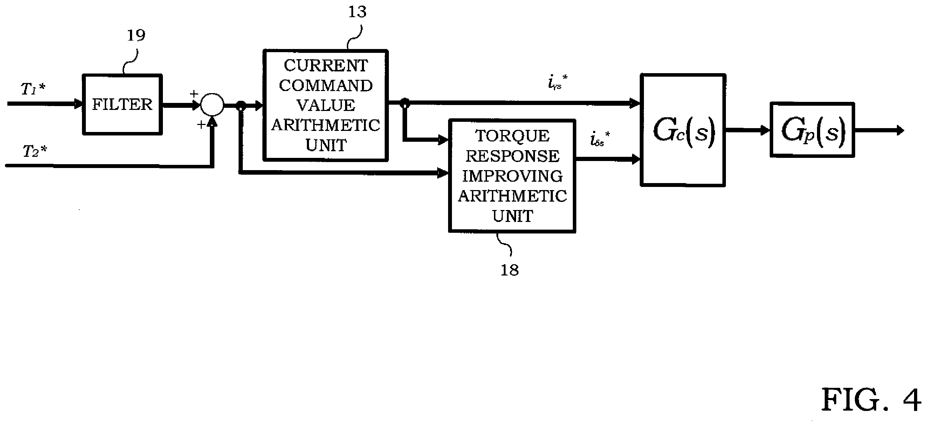

FIG. 4 is a drawing showing still another configuration example of the current command value arithmetic unit 13 and the torque response improving arithmetic unit 18. In FIG. 4, the target motor torque is inputted to the current command value arithmetic unit 13, and the current command value arithmetic unit 13 calculates a $\gamma$-axis current command value (the magnetic flux current command value) $i_{\gamma s}{}^*$. The target motor torque obtained by adding the target motor torque $T1^*$, for which delay processing was carried out by the filter 19, to the target motor torque $T2^*$ and the $\gamma$-axis current command value $i_{\gamma s}{}^*$ are inputted to the torque response improving arithmetic unit 18, and the torque response improving arithmetic unit 18 obtains the $\delta$-axis current command value $i_{\delta s}{}^*$ on the basis of the following formula (12). Here, $K_{Te}$ of the formula (12) is a coefficient determined by a parameter of the induction motor 1.

[Formula 12]

$$i_{\delta s} = \frac{T_1^* + T_2^*}{K_{Te} \cdot \hat{\phi}_{\gamma r}} \qquad \cdots (12)$$

where $\quad \hat{\phi}_{\gamma r} = \dfrac{M}{\tau \cdot s + 1} \cdot i_{\gamma s}{}^*$

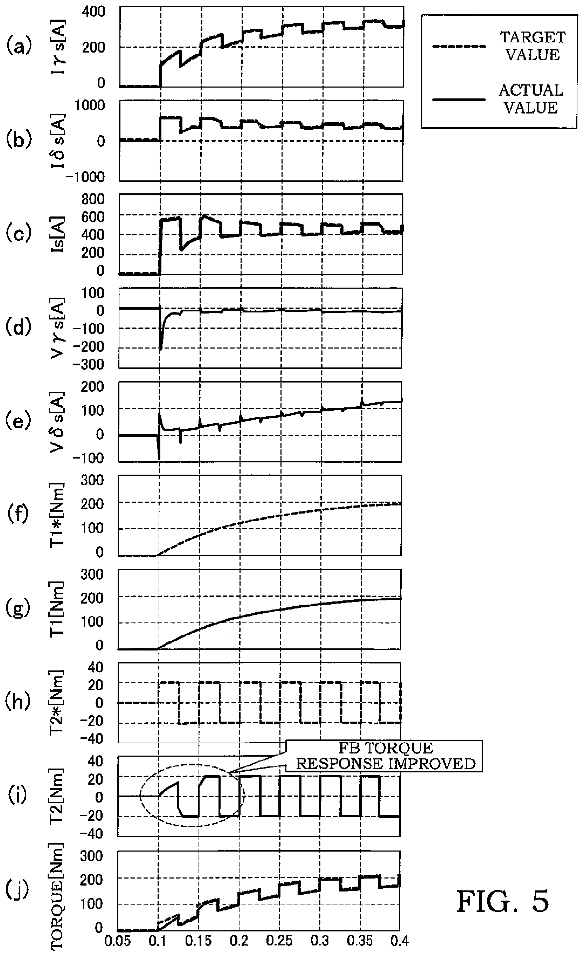

FIG. 5 is a drawing showing a controlled result of the motor control apparatus shown in FIG. 1 according to the first embodiment. FIGS. 5(a) to 5(j) respectively denote the $\gamma$-axis current $i_{\gamma s}$, the $\delta$-axis current $i_{\delta s}$, a current vector Is, a $\gamma$-axis voltage $V_{\gamma s}$, a $\delta$-axis voltage $V_{\delta s}$, a feedforward torque command value $T_1{}^*$, a feedforward torque actual value $T_1$, a feedback torque command value $T_2{}^*$, a feedback torque $T_2$, and a total torque.

In the present embodiment, since high response processing without a delay element is applied to the torque $T_2{}^*$ in which a high speed response is required (see FIGS. 5(h) and 5(i)), it is possible to achieve a desired torque. Further, by causing the torque $T_1{}^*$ in which the high speed response is not required to have a delay, it becomes hard to limit the current command value to a current limit value (upper limit value) with respect to the torque $T_2{}^*$ in which the high speed response is required. However, the current limit value is set so that a $\delta$-axis current limit value becomes the same value as a $\gamma$-axis current limit value on the basis of the maximum permissible value $I_{s\_max}$ of the current.

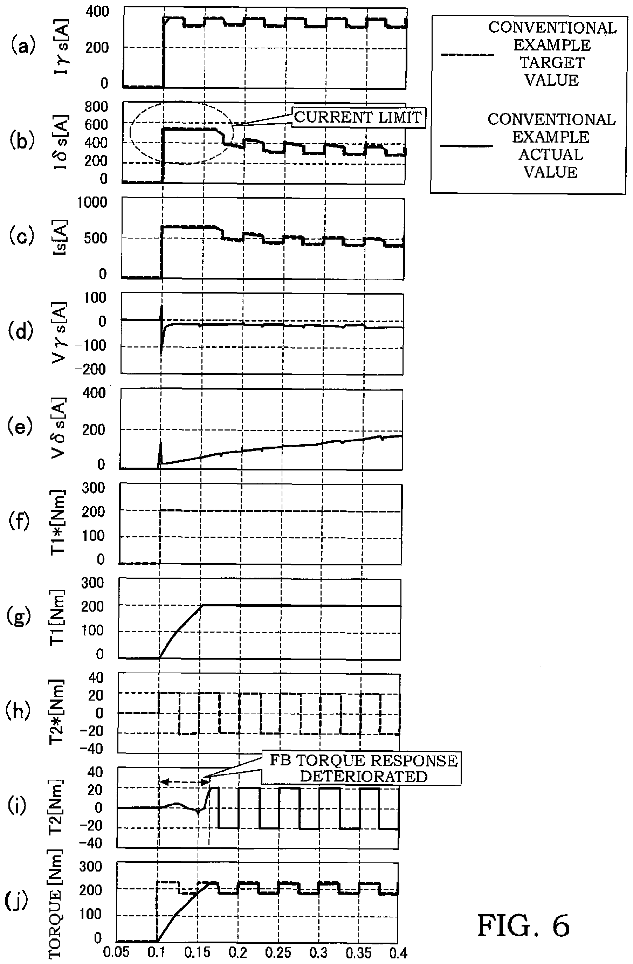

FIG. 6 is a drawing showing a controlled result of a conventional motor control apparatus, in which a target motor torque is not divided into two of $T_1{}^*$ and $T_2{}^*$ and no torque response improving arithmetic unit 18 and no filter 19 are provided in the configuration shown in FIG. 1. FIGS. 6(a) to 6(j) respectively denote the $\gamma$-axis current $i_{\gamma s}$, the $\delta$-axis current $i_{\delta s}$, the current vector Is, the $\gamma$-axis voltage $V_{\gamma s}$, the $\delta$-axis voltage $V_{\delta s}$, the feedforward torque command value $T_1{}^*$, the feedforward torque actual value $T_1$, the feedback torque command value $T_2{}^*$, the feedback torque $T_2$, and the total torque.

Since the $\delta$-axis current is calculated in view of a delay of a $\gamma$-axis magnetic flux response, the $\delta$-axis current is easily limited to the current limit value (upper limit value) when the $\gamma$-axis current is small or the torque command value is large (see FIG. 6(b)). In a case where the $\delta$-axis current is limited to the current limit value, the feedback torque $T_2$ cannot follow the command value $T_2{}^*$ (see FIG. 6(i)), whereby the torque response becomes a gentle motion with respect to a target value (see FIG. 6(j)). Therefore, vibration, such as torsional vibration of the vehicle, cannot be suppressed per se because a delay of the $\gamma$-axis magnetic flux influences on the torque $T_2$ in which the quick response is required (see FIG. 6(i)). In this regard, a response for a torque $T_1$ that is determined on the basis of an accelerator operation of a driver may be slow, and there is no problem even though the response becomes gentle with respect to the target value (see FIG. 6(g)).

In this regard, since a motor parameter used when to calculate the $\delta$-axis current command value or its correction value varies due to operation conditions, a parameter varying compensator for compensating this variation may be provided.

Example useful for understanding the invention

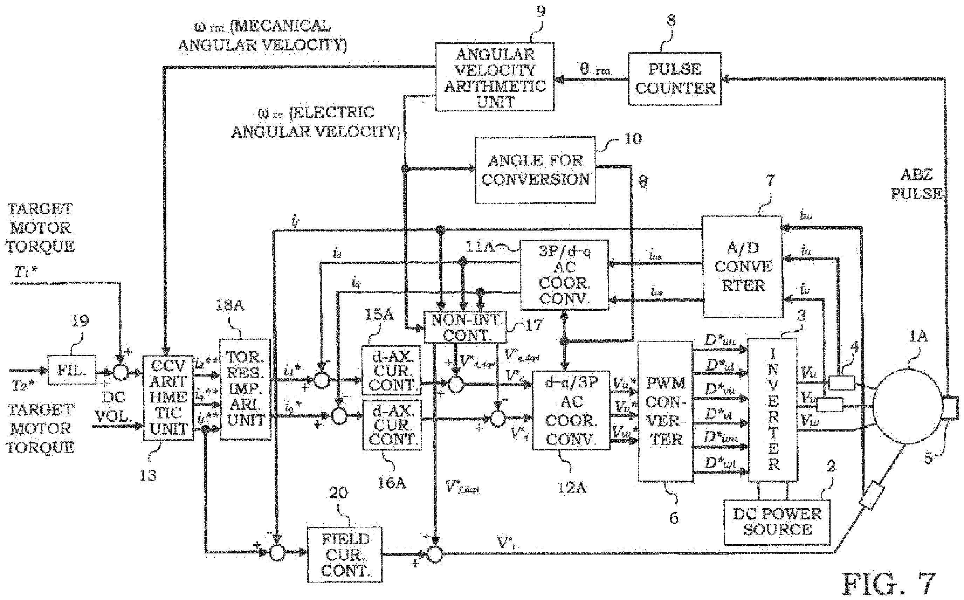

FIG. 7 is a block diagram showing a configuration of the case where the motor control apparatus is applied to a field-winding synchronous motor 1A in which winding for causing a field current to flow is wound around the rotor. The same reference numerals are provided to the same elements as those of the configuration shown in FIG. 1, and their detailed explanation will be omitted.

The configuration shown in FIG. 7 is different from the configuration shown in FIG. 1 in that a field current controller 20 is added and the slip angle frequency controller 14 is omitted. The torque response improving arithmetic unit 18A shown in FIG. 7 corresponds to the torque response improving arithmetic unit 18 shown in FIG. 1, a d-axis current controller 15A and a q-axis current controller 16A correspond to the magnetic flux current controller 15 and the torque current controller 16 shown in FIG. 1, respectively. Further, a three-phase/d-q AC coordinate converter 11A and a d-q/three-phase AC coordinate converter 12A correspond to the three-phase/$\gamma$-$\delta$ AC coordinate converter 11 and the $\gamma$-$\delta$/three-phase AC coordinate converter 12 shown in FIG. 1, respectively.

The three-phase/d-q AC coordinate converter 11A carries out conversion from a three-phase AC coordinate system (UVW axes) into an orthogonal biaxial DC coordinate system (d-q axes). The d-q/three-phase AC coordinate converter 12A carries out conversion from the orthogonal biaxial DC coordinate system (d-q axes) into the three-phase AC coordinate system (UVW axes).

The d-axis current controller 15A causes a d-axis current command value $i_d$* to follow a measured d-axis current $i_d$ at desired responsiveness without steady-state deviation. Further, the q-axis current controller 16A causes a q-axis current command value $i_q$* to follow a measured q-axis current $i_q$ at desired responsiveness without steady-state deviation. The field current controller 20 causes a field current command value $i_f$* to follow a measured field current $i_f$ at desired responsiveness without steady-state deviation.

The control content carried out by the torque response improving arithmetic unit 18A will be described below.

A torque formula of a general salient pole type field-winding motor is expressed by the following formula (13). Here, M denotes mutual inductance, $L_d$ denotes d-axis self-inductance, $L_q$ denotes q-axis self-inductance, and p denotes a pole-pair number.

[Formula 13]

$$T = p\{M \cdot i_f + (L_d - L_q) \cdot i_d\} \cdot i_q \qquad \cdots (13)$$

Further, in the case of a non-salient pole type field-winding motor, $L_d$ is equal to $L_q$. For this reason, the torque formula is expressed by the following formula (14).

[Formula 14]

$$T = p \cdot M \cdot i_f \cdot i_q \qquad \cdots (14)$$

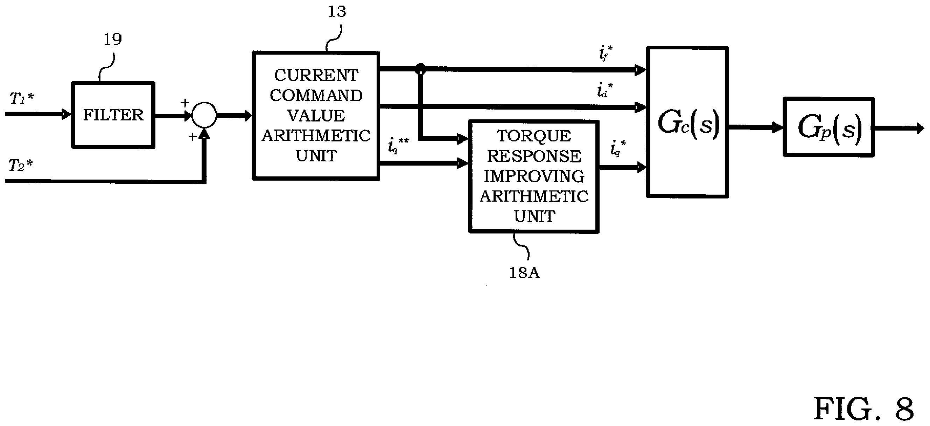

FIG. 8 is a drawing for explaining processing content carried out by the torque response improving arithmetic unit 18A. The torque response improving arithmetic unit 18A shown in FIG. 8 carries out the similar processing to that by the torque response improving arithmetic unit 18 as shown in FIG. 2. In this case, the $\gamma$-axis current command value $i_{\gamma s}$** of FIG. 2 corresponds to the field current command value $i_f$* of FIG. 8, and the $\delta$-axis current command value $i_{\delta s}$** of FIG. 2 corresponds to the q-axis current command value $i_q$** of FIG. 8.

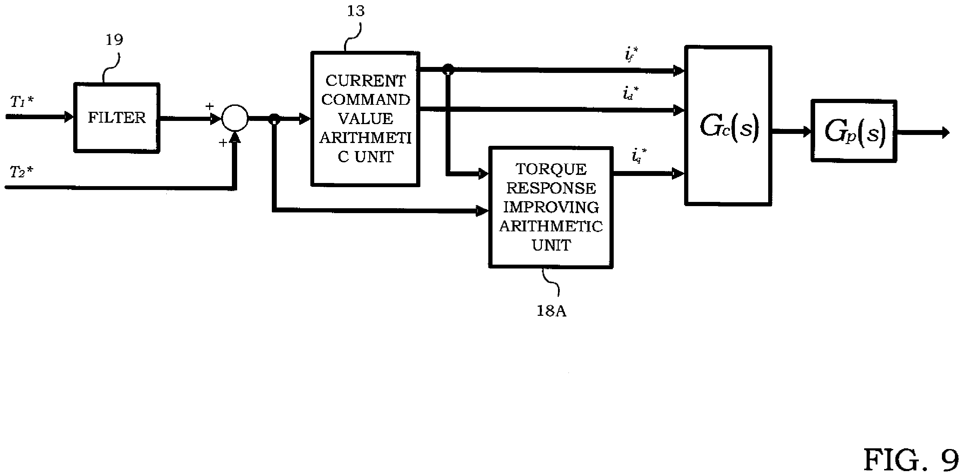

FIG. 9 is a drawing showing another configuration example of the torque response improving arithmetic unit 18A. In FIG. 9, the target motor torque obtained by adding the target motor torque T1*, for which delay processing was carried out by the filter 19, to the target motor torque T2* and the field current command value $i_f$* are inputted to the torque response improving arithmetic unit 18A, and the torque response improving arithmetic unit 18A obtains a $\delta$-axis current command value $i_q$* on the basis of the following formula (15).

[Formula 15]

$$i_q{}^* = \frac{T_1{}^* + T_2{}^*}{p \cdot M \cdot i_f} \qquad \cdots (15)$$

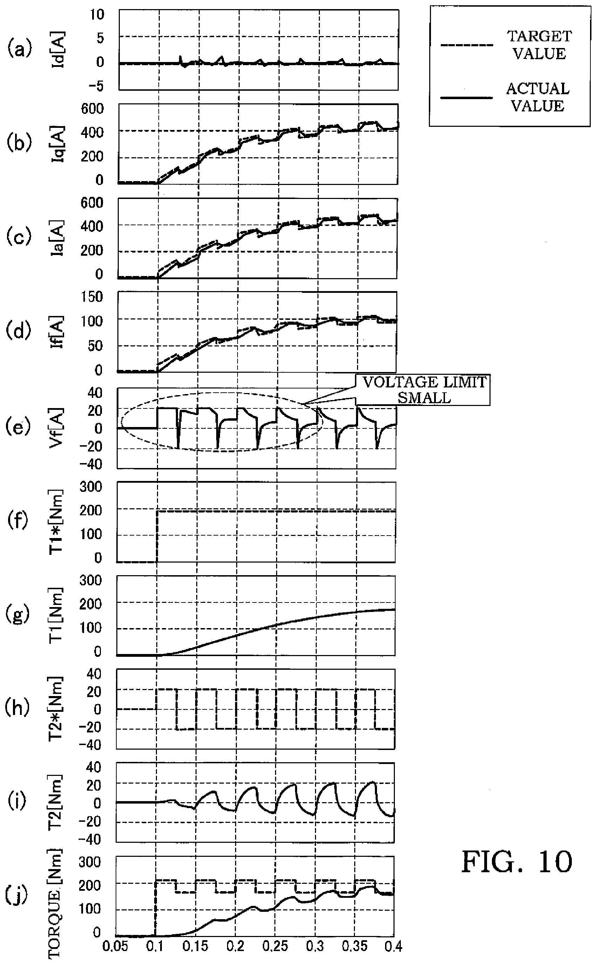

FIG. 10 is a drawing showing a controlled result of the motor control apparatus with the configuration shown in FIG. 7. FIGS. 10(a) to 10(j) respectively denote the d-axis current $i_d$, the q-axis current $i_q$, a current vector Ia, the field current If, a field voltage Vf, the feedforward torque command value $T_1$*, the feedforward torque actual value T1, the feedback torque command value $T_2$*, the feedback torque T2, and the total torque.

As described above, since the high response processing without the delay element is applied to the torque $T_2$* in which the high speed response is required (see FIGS. 10(h) and 10(i)), it is possible to achieve the desired torque.

Further, by causing the torque $T_1^*$ in which the high speed response is not required to have a delay, it is hard to limit the current command value to the current limit value (upper limit value) with respect to the torque $T_2^*$ in which the high speed response is required.

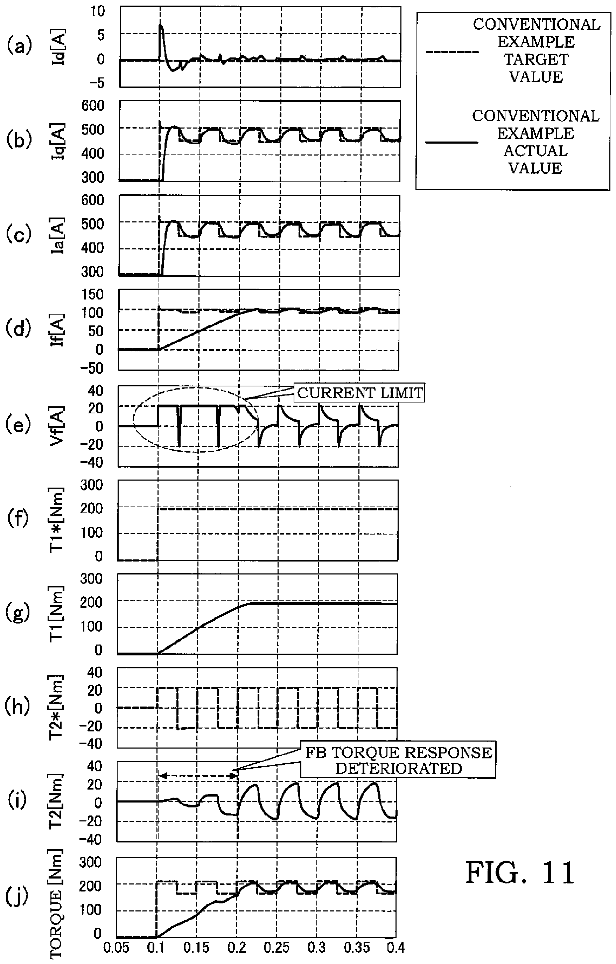

FIG. 11 is a drawing showing a controlled result of the conventional motor control apparatus, in which the target motor torque is not divided into two of $T_1^*$ and $T_2^*$ and no torque response improving arithmetic unit 18A and no filter 19 are provided in the configuration shown in FIG. 7. FIGS. 11(a) to 11(j) respectively denote the d-axis current $i_d$, the q-axis current $i_q$, the current vector Ia, the field current If, the field voltage Vf, the feedforward torque command value $T_1^*$, the feedforward torque actual value T1, the feedback torque command value $T_2^*$, the feedback torque T2, and the total torque. In the configuration in which the torque response improving arithmetic unit 18A and the filter 19 are not provided, there is need to cause a response of the field current to become high responsiveness in order to cause the torque response to become high responsiveness. However, this causes a voltage peak of the field voltage Vf to become larger, and the current command value is limited to the upper limit value (see FIG. 11(e)). The response of the torque $T_2$, which is desired to become high responsiveness, cannot follow the target value while the field voltage Vf is limited to the upper limit value.

As described above, according to the motor control apparatus of the first embodiment, the motor control apparatus includes: the inverter 3 configured to apply the voltage to the AC induction motor 1 to be driven; the current command value arithmetic unit 13 and the torque response improving arithmetic unit 18 that function as a command value calculator configured to calculate the command value of the AC voltage outputted from the inverter 3 on the basis of the target motor torque of the AC the motor 1; and the magnetic flux current controller 15, the torque current controller 16 and the $\gamma$-$\delta$/three-phase AC coordinate converter 12, and the PWM convertor 6 that function as an inverter controller configured to control the inverter 3 on the basis of the AC voltage command value. The target motor torque of the AC induction motor includes a first target motor torque T2* and a second target motor torque T1*, wherein a high speed response is required in the first target motor torque in order to at least suppress torsional vibration, the second target motor torque T1* is a lower speed response than the first target motor torque T2*, and delay processing is carried out for the second target motor torque T1*. The current command value arithmetic unit 13 and the torque response improving arithmetic unit 18 calculate a magnetic flux current command value $i_{\gamma s}^{**}$, in which current responsiveness with respect to the input is slow, on the basis of the target motor torque, and calculate the torque current command value $i_{\delta s}^{*}$, in which current responsiveness is quicker than that of the magnetic flux current command value, on the basis of the target motor torque and the magnetic flux current command value $i_{\gamma s}^{**}$. The target motor torque includes the first target motor torque T2* and the second target motor torque T1* for which the delay processing is carried out, whereby it is possible to suppress vehicle body vibration by means of the first target motor torque T2*. For this reason, it is possible to improve a ride quality performance of occupants. Further, since the delay processing is carried out for the second target motor torque T1* with the low speed response, a current can be used for the first target motor torque T2*. For this reason, it becomes hard to limit the current command value to the current limit value (the upper limit value) with respect to the first target motor torque $T_2^*$ in which the high speed response is required, and this makes it possible to achieve the desired torque.

(Second Embodiment)

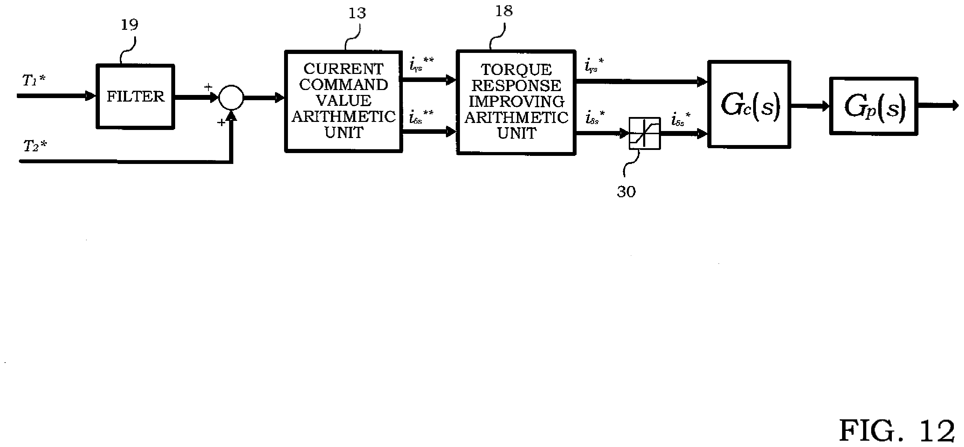

FIG. 12 is a block diagram showing a main configuration of a motor control apparatus according to a second embodiment, and corresponds to FIG. 2 in the first embodiment. As well as the configuration shown in FIG. 2, an induction motor is adopted as the motor 1. The same reference numerals are provided to the elements similar to the configuration shown in FIG. 2, and their detailed explanation will be omitted.

In the motor control apparatus according to the second embodiment, a limiter 30 is provided in the subsequent stage of the torque response improving arithmetic unit 18. The limiter 30 carries out processing to limit the $\delta$-axis current command value $i_{\delta s}^{*}$ outputted from the torque response improving arithmetic unit 18 to an upper limit value $i_{\delta s\_lim}$. The upper limit value $i_{\delta s\_lim}$ is expressed by the following formula (16) on the basis of the maximum value $I_{s\_max}$ of the current of the motor 1 and the $\gamma$-axis current command value $i_{\gamma s}^{*}$.

[Formula 16]

$$i_{\delta s\_lim:} = \sqrt{I_{s\_max}^{2} - i_{\gamma s}^{*2}} \qquad \cdots (16)$$

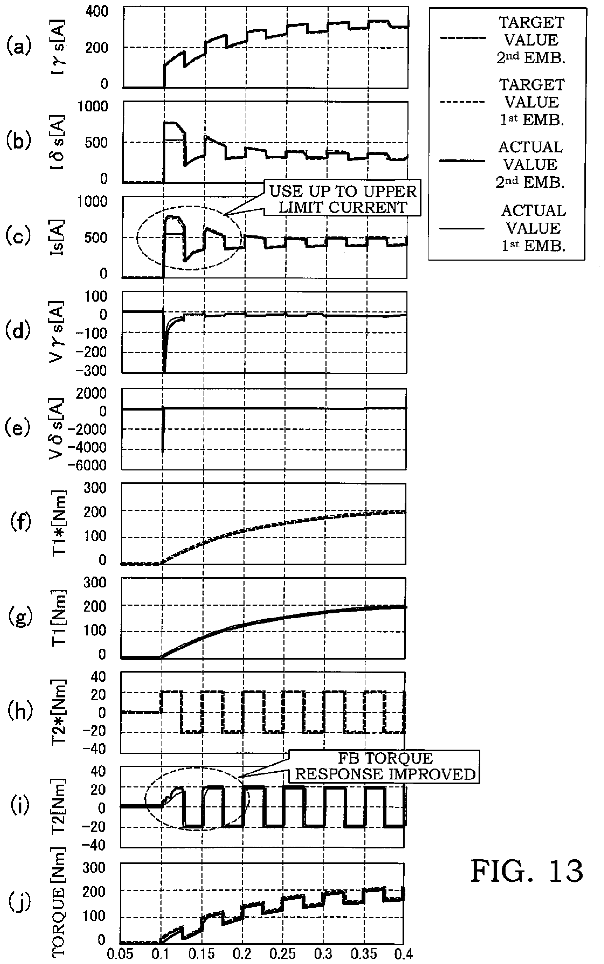

FIG. 13 is a drawing showing a controlled result of the motor control apparatus according to the second embodiment. However, for comparison, FIG. 13 also shows the controlled result of the motor control apparatus according to the first embodiment. FIGS. 13(a) to 13(j) respectively denote the $\gamma$-axis current $i_{\gamma s}$, the $\delta$-axis current $i_{\delta s}$, the current vector Is, the $\gamma$-axis voltage $V\gamma s$, the $\delta$-axis voltage $V_{\delta s}$, the feedforward torque command value $T_1^*$, the feedforward

torque actual value T1, the feedback torque command value $T_2^*$, the feedback torque T2, and the total torque.

In the present embodiment, by limiting the $\delta$-axis current command value to the upper limit value $i_{\delta s\_lim}$, it is possible to prevent excess or over current (see FIGS. 13(b) and 13(c)), and it is possible to achieve the torque response with the maximum current compared with the case of the first embodiment in which both of the $\gamma$-axis current and the $\delta$-axis current are limited to the same quantity of the upper limit value.

The $\delta$-axis current command value is not limited, but the $\gamma$-axis current command value may be limited. In this case, an upper limit value $i_{\gamma s\_lim}$ for limiting the $\gamma$-axis current command value is expressed by the following formula (17).
[Formula 17]

$$i_{\gamma s\ \lim} = \sqrt{I_{s\_max}{}^2 - i_{\delta s}{}^{*2}} \qquad \cdots (17)$$

here $i_{\delta s}^* = i_{\delta s}^{**} + i_{\delta s\_T2}$

$i_{\delta s}^{**}$ : $\delta$-axis current command value of $T_1$
$i_{\delta s\_T2}$ : $\delta$-axis current corrected value of $T_1$

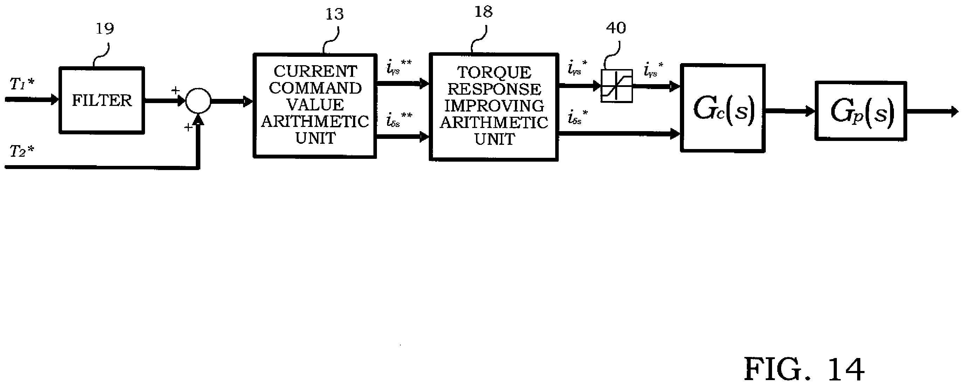

FIG. 14 is a block diagram showing a configuration of the case where the $\gamma$-axis current command value $i_{\gamma s}^*$ outputted from the torque response improving arithmetic unit 18 is limited to the upper limit value $i_{\gamma s\_lim}$ by a limiter 40.

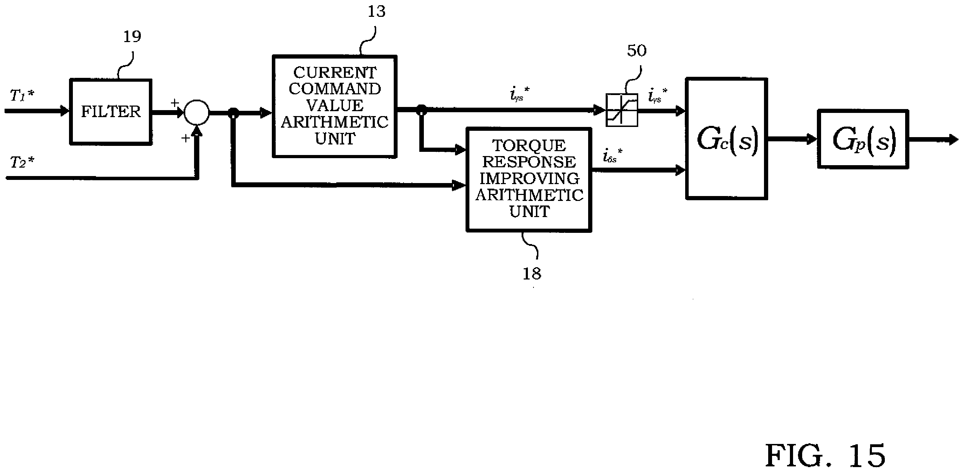

FIG. 15 is a block diagram showing a configuration of the case where a limiter 50 is provided in the configuration shown in FIG. 4. The limiter 50 limits the $\gamma$-axis current command value $i_{\gamma s}^*$ outputted from the current command value arithmetic unit 13 to the upper limit value $i_{\gamma s\_lim}$. In this regard, as well as FIG. 12, the $\delta$-axis current command value may be limited to the upper limit value $i_{\delta s\_lim}$.

As described above, according to the motor control apparatus of the second embodiment, the limiter value is calculated on the basis of at least one of the $\delta$-axis current command value $i_{\delta s}^*$ and the $\gamma$-axis current command value $i_{\gamma s}^*$ and the maximum command value $I_{s\_max}$. The $\delta$-axis current command value $i_{\delta s}^*$ or the $\gamma$-axis current command value $i_{\gamma s}^*$ is limited on the basis of the calculated limiter value. For this reason, it is possible to prevent excess or over current. In addition, it is possible to achieve the torque response with the maximum current compared with the case where the command values of both the shafts are limited to the same quantity of a limit value.

(Third Embodiment)

In a motor control apparatus according to a third embodiment, even though a target motor torque obtained by adding the target motor torque T1* for which the delay processing was carried out by the filter 19 to the target motor torque $T_2^*$ is zero or in the vicinity of zero (a predetermined torque or lower), a current to generate magnetic flux at the rotor side is outputted by a predetermined amount greater than zero.

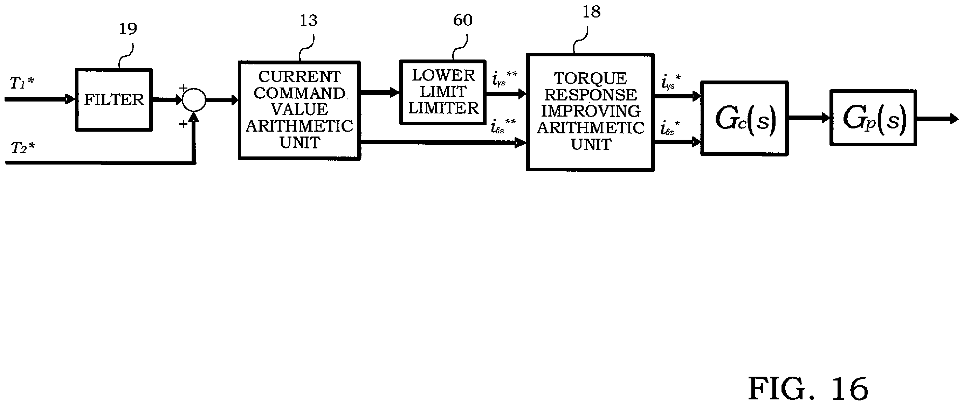

FIG. 16 is a block diagram showing a main configuration of the motor control apparatus according to the third embodiment. The same reference numerals are provided to the same elements as those of the configuration shown in FIG. 2, and their detailed explanation will be omitted.

In the motor control apparatus according to the third embodiment, a lower limit limiter 60 is provided in the subsequent stage of the current command value arithmetic unit 13. The lower limit limiter 60 carries out limiter processing in which the $\gamma$-axis current command value $i_{\gamma s}^{**}$ outputted from the current command value arithmetic unit 13 becomes a predetermined lower limit or more. The predetermined lower limit is larger than zero. Namely, even though the target motor torque obtained by adding the target motor torque T1*, for which time delay processing was carried out, to the target motor torque $T_2^*$ is zero or in the vicinity of zero, the $\gamma$-axis current command value (the magnetic flux current command value) $i_{\gamma s}^{**}$ with the slow response is set to become the predetermined lower limit, which is larger than zero, or more.

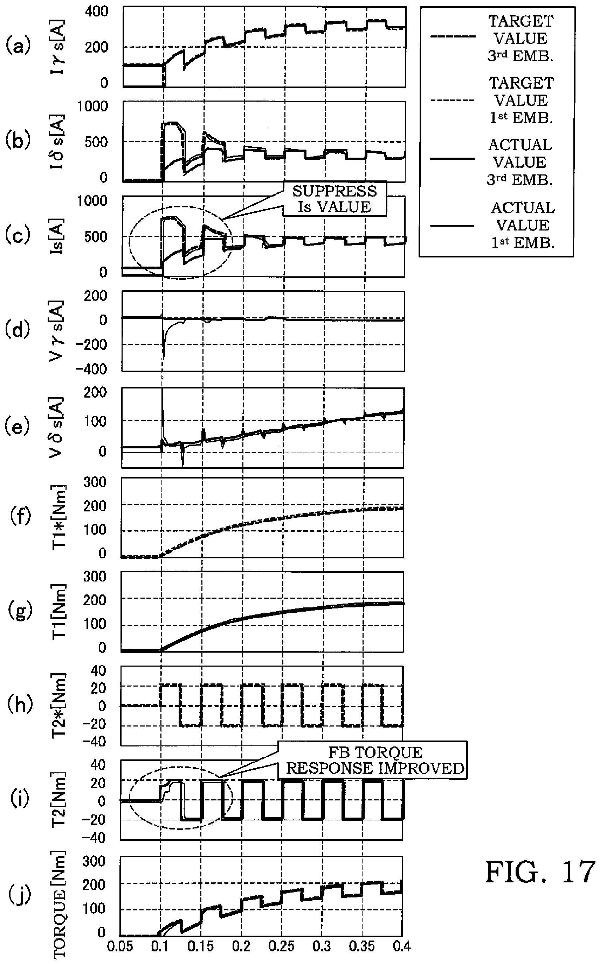

FIG. 17 is a drawing showing a controlled result of the motor control apparatus according to the third embodiment. However, for comparison, FIG. 17 also shows the controlled result of the motor control apparatus according to the first embodiment. FIGS. 17(a) to 17(j) respectively denote the $\gamma$-axis current $i_{\gamma s}$, the $\delta$-axis current $i_{\delta s}$, the current vector Is, the $\gamma$-axis voltage V$\gamma$s, the $\delta$-axis voltage V$\delta$s, the feedforward torque command value $T_1^*$, the feedforward torque actual value T1, the feedback torque command value $T_2^*$, the feedback torque T2, and the total torque. As described above, even though the target motor torque is zero or in the vicinity of zero, a magnetic flux current command value $i_{\gamma s}^*$ with a slow response is set to become a predetermined lower limit, which is larger than zero, or more (see FIG. 17(a)). For this reason, it is possible to prevent a torque-axis current command value from becoming excessive when the magnetic flux is in the vicinity of zero, and it is possible to achieve a desired torque response by mitigating a delay of the magnetic flux (FIG. 17(i)).

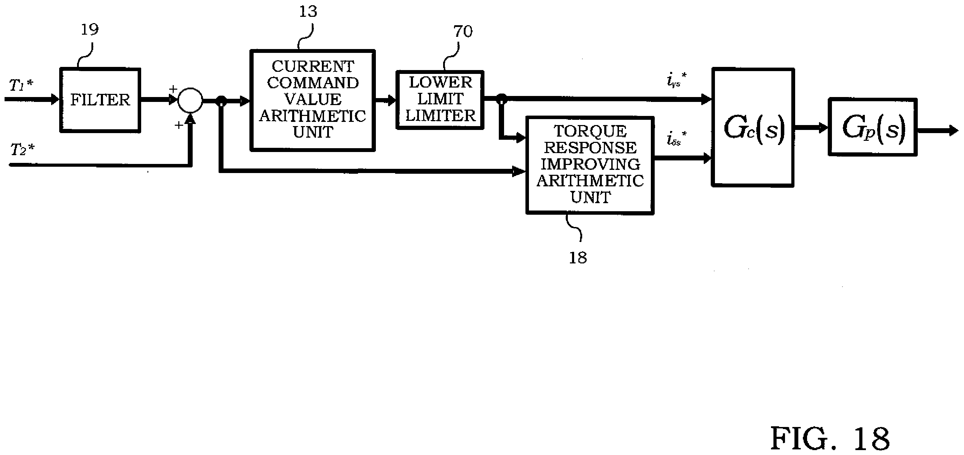

FIG. 18 is a block diagram showing a configuration of the case where a lower limit limiter 70 is provided in the configuration shown in FIG. 4. The lower limit limiter 70 operates so that the magnetic flux current command value $i_{\gamma s}{}^*$ with the slow response becomes the predetermined lower limit, which is larger than zero, or more even though the target motor torque obtained by adding the target motor torques T1* and $T_2{}^*$ is zero or in the vicinity of zero. The limiter 70 carries out limiter processing so that the $\gamma$-axis current command value $i_{\gamma s}{}^{**}$ outputted from the current command value arithmetic unit 13 becomes the predetermined lower limit or more.

Example useful for understanding the invention

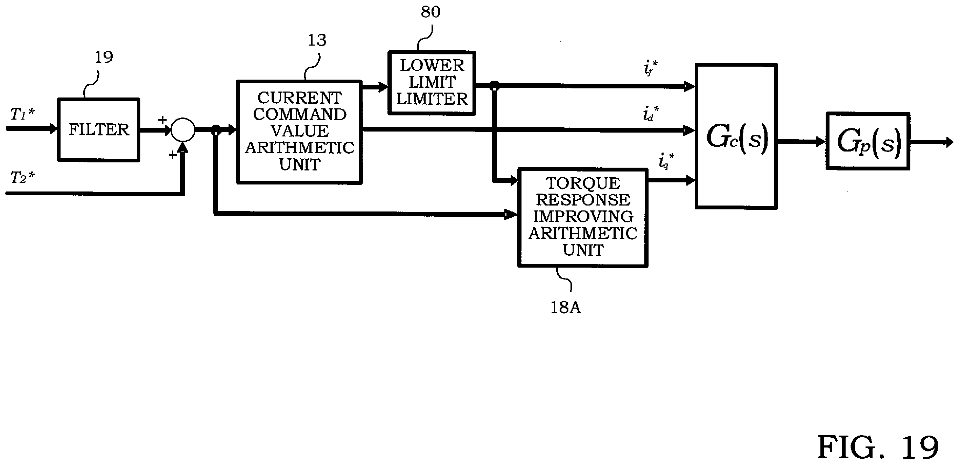

FIG. 19 is a block diagram showing a configuration of the case where a lower limit limiter 80 is provided in the configuration of the field-winding synchronous motor shown in FIG. 9 so that the field current $i_f{}^*$ with the slow response becomes the predetermined lower limit, which is larger than zero, or more even though the target motor torque obtained by adding the target motor torques T1* and $T_2{}^*$ is zero or in the vicinity of zero.

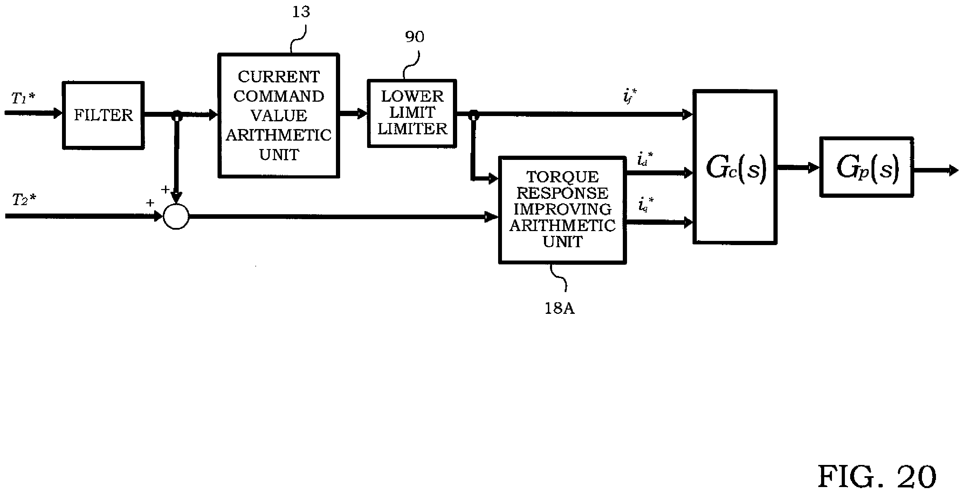

FIG. 20 is a block diagram showing a configuration of the case where a lower limit limiter 90 is provided in another configuration of the field-winding synchronous motor so that the field current $i_f{}^*$ with the slow response becomes the predetermined lower limit larger than zero or more even though the target motor torque obtained by adding the target motor torques T1* and $T_2{}^*$ is zero or in the vicinity of zero.

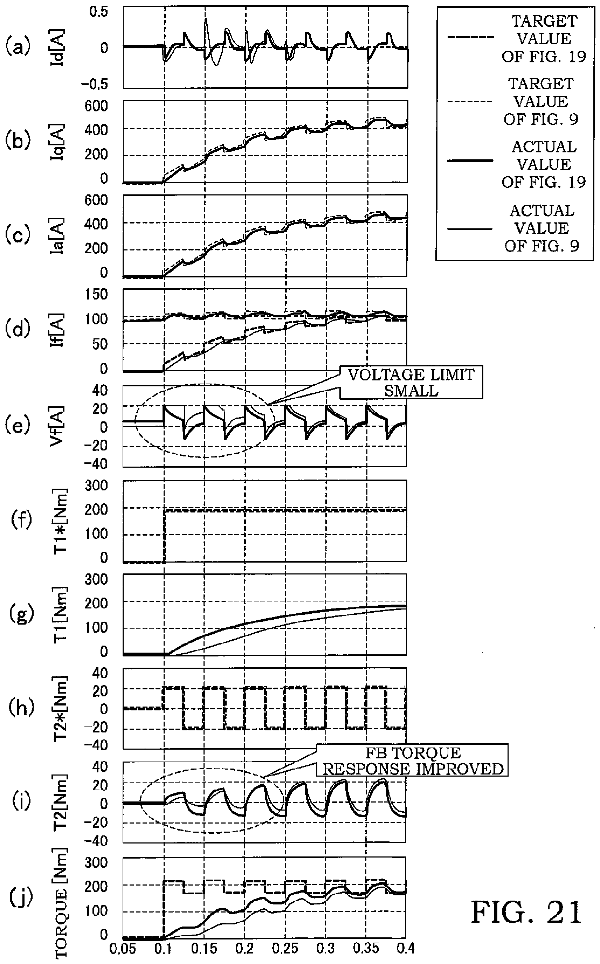

FIG. 21 is a drawing showing a controlled result of the configuration shown in FIG. 19. In FIG. 21, the controlled result of the configuration shown in FIG. 9 is also shown for comparison. FIGS. 21(a) to 21(j) respectively denote the d-axis current $i_d$, the q-axis current $i_q$, the current vector Ia, the field current $I_f$, the field voltage Vf, the feedforward torque command value $T_1{}^*$, the feedforward torque actual value T1, the feedback torque command value $T_2{}^*$, the feedback torque T2, and the total torque. As described above, even though the torque command value $T_1{}^*$ is zero or in the vicinity of zero, the field current $i_f{}^*$ with the slow response is outputted by the predetermined amount greater than zero (see FIG. 21(d)). For this reason, it is possible to prevent the torque-axis current command value from becoming excessive when the magnetic flux is in the vicinity of zero, and it is possible to achieve the desired torque response (see FIG. 21(i)).

As described above, according to the motor control apparatus of the third embodiment, the magnetic flux current command value $i_{\gamma s}{}^*$ is set to a predetermined value larger than zero or higher even in a case where the target motor torque is the predetermined torque or lower. For this reason, it is possible to prevent the torque-axis current command value from becoming excessive when the magnetic flux is in the vicinity of zero, and it is possible to achieve the desired torque response by mitigating a delay of the magnetic flux.

The present invention is not limited to the embodiments described above, and the present invention can be configured so that the features of the respective embodiments are combined appropriately, for example.

**Claims**

1. A motor control apparatus comprising:

   an inverter (3) configured to apply a voltage to an AC induction motor (1) to be driven;
   a command value calculator (13, 18) configured to calculate a command value of an AC voltage outputted from the inverter (3) on the basis of a target motor torque of the AC induction motor (1); and
   an inverter controller (15, 16, 12, 6) configured to control the inverter (3) on the basis of the command value of the AC voltage,
   **characterized in that** the target motor torque of the AC induction motor (1) includes a first target motor torque and a second target motor torque, a high speed response being required in the first target motor torque, which is used for suppressing torsional vibration, the second target motor torque being a lower speed response than the first target motor torque, time delay processing being carried out by a filter (19) for the second target motor torque so that the second target motor torque output by the filter (19) is delayed at least for a period of time longer than a response time of the second target motor torque that is defined in accordance with an accelerator opening degree,
   wherein the command value calculator (13, 18) is configured to calculate, on the basis of the target motor torque, a magnetic flux current command value, and the command value calculator (13, 18) is configured to calculate, on the basis of the target motor torque and the magnetic flux current command value, a torque current command value, wherein the magnetic flux current command value and the torque current command value are obtained by converting a three-phase AC current into an orthogonal biaxial coordinate system synchronized with a power source angular frequency, and
   wherein current responsiveness of the torque current value to torque current command value is quicker than that of the magnetic flux current value to the magnetic flux current command value.

2. The motor control apparatus according to claim 1,
wherein the command value calculator (13, 18) calculates, on the basis of the target motor torque, the torque current command value in which the current responsiveness is quicker than that of the magnetic flux current command value, and the command value calculator (13, 18) calculates a torque current command value after correction by correcting the calculated torque current command value on the basis of the magnetic flux current command value.

3. The motor control apparatus according to claim 1 or 2, further comprising:

a limiter value calculator (13) configured to calculate a limiter value on the basis of at least one command value of the magnetic flux current command value and the torque current command value, and the maximum value of the current command value; and
a current command value limiter (30, 40, 50, 60, 70, 80, 90) configured to limit the magnetic flux current command value or the torque current command value on the basis of the limiter value.

4. The motor control apparatus according to any one of claims 1 to 3,
wherein the command value calculator (13, 18) sets the magnetic flux current command value to a predetermined value larger than zero or higher even in a case where the target motor torque is a predetermined torque or lower.

5. A motor control method of controlling an AC induction motor (1) by calculating a command value of an AC voltage outputted from an inverter (3) on the basis of a target motor torque of the AC induction motor (1) and controlling the inverter (3) on the basis of the AC voltage,
**characterized in that** the target motor torque of the AC induction motor (1) includes a first target motor torque and a second target motor torque, a high speed response being required in the first target motor torque, which is used for suppressing torsional vibration, the second target motor torque being a lower speed response than the first target motor torque, time delay processing being carried out by a filter for the second target motor torque so that the second target motor torque output by the filter (19) is delayed at least for a period of time longer than a response time of the second target motor torque that is defined in accordance with an accelerator opening degree, and
the motor control method comprises:

calculating a magnetic flux current command value on the basis of the target motor torque when the command value of the AC voltage is calculated on the basis of the target motor torque;
calculating a torque current command value on the basis of the target motor torque and the magnetic flux current command value; and
current responsiveness of the torque current value to torque current command value is quicker than that of the magnetic flux current value to the magnetic flux current command value.


**Patentansprüche**

1. Motorsteuerungsvorrichtung, umfassend:

einen Inverter (3) zum Anlegen einer Spannung an einen anzutreibenden Wechselstrom-Induktionsmotor (1);
einen Sollwertkalkulator (13, 18) zum Berechnen eines Wechselspannungssollwerts, der von dem Inverter (3) auf der Basis eines Sollmotordrehmoments des Wechselstrom-Induktionsmotors (1) ausgegeben wird; und
eine Inverter-Steuerung (15, 16, 12, 6) zur Steuerung des Inverters (3) auf der Basis des Wechselspannungssollwerts,
**dadurch gekennzeichnet, dass** das Sollmotordrehmoment des Wechselstrom-Induktionsmotors (1) ein erstes Sollmotordrehmoment und ein zweites Sollmotordrehmoment aufweist, wobei für das erste Sollmotordrehmoment eine kurze Ansprechzeit erforderlich ist, die zur Unterdrückung von Torsionsschwingungen dient, wobei das zweite Sollmotordrehmoment eine längere Ansprechzeit als das erste Solldrehmoment aufweist, wobei für das zweite Solldrehmoment eine Zeitverzögerung mittels eines Filters (19) derart durchgeführt wird, dass das von dem Filter (19) ausgegebene zweite Sollmotordrehmoment zumindest um eine Zeitdauer verlängert wird, die länger als eine Ansprechzeit des zweiten Sollmotordrehmoments ist, das entsprechend eines Gaspedalöffnungsgrades definiert ist,
wobei der Sollwertkalkulator (13, 18) dazu ausgebildet ist, auf der Basis des Sollmotordrehmoments einen Magnetflussstromsollwert zu berechnen, und der Sollwertkalkulator (13, 18) dazu ausgebildet ist, auf der Basis des Sollmotordrehmoments und des Magnetflussstromsollwerts einen Drehmomentstromsollwert zu berechnen, wobei der Magnetflussstromsollwert und der Drehmomentstromsollwert durch Umwandlung eines Dreiphasen-Wechselstroms in ein orthogonal-biaxiales Koordinatensystem erhalten werden, das mit einer Winkelfrequenz einer Stromquelle synchronisiert ist, und wobei die Stromansprechzeit des Drehmomentstromwerts auf den Drehmomentstromsollwert schneller ist als die des Magnetflussstromwerts auf den Magnetflussstromsollwert.

2. Motorsteuerungsvorrichtung gemäß Anspruch 1, wobei der Sollwertkalkulator (13, 18) auf der Basis des Sollmotordrehmoments den Drehmomentstromsollwert berechnet, bei dem die Ansprechzeit schneller als die des Magnetflussstromsollwerts ist, und der Sollwertkalkulator (13, 18) den Drehmomentstromsollwert nach einer Korrektur berechnet, bei der der berechnete Drehmomentstromsollwert auf der Basis des Magnetflussstromsollwerts korrigiert wird.

3. Motorsteuerungsvorrichtung gemäß Anspruch 1 oder 2, die des Weiteren umfasst:

einen Grenzwertkalkulator (13) zur Berechnung eines Grenzwerts auf der Basis des Magnetflussstromsollwerts oder des Drehmomentstromsollwerts oder des Maximalwerts des Stromsollwerts; und
einen Stromsollwertbegrenzer (30, 40, 50, 60, 70, 80, 90) zur Begrenzung des Magnetflussstromsollwerts oder des Drehmomentstromsollwerts auf der Basis des Grenzwerts.

4. Motorsteuerungsvorrichtung gemäß einem der Ansprüche 1 bis 3, wobei der Sollwertkalkulator (13, 18) den Magnetflussstromsollwert auf einen vorbestimmten Wert einstellt, der größer als Null oder höher ist, selbst wenn das Sollmotordrehmoment ein vorbestimmtes Drehmoment aufweist oder niedriger ist.

5. Motorsteuerungsverfahren zur Steuerung eines Wechselstrom-Induktionsmotors (1) durch Berechnen eines Wechselspannungssollwerts, der von dem Inverter (3) auf der Basis eines Sollmotordrehmoments des Wechselstrom-Induktionsmotors (1) ausgegeben wird; und zur Steuerung des Inverters (3) auf der Basis des Wechselspannungssollwerts,
**dadurch gekennzeichnet, dass** das Sollmotordrehmoment des Wechselstrom-Induktionsmotors (1) ein erstes Sollmotordrehmoment und ein zweites Sollmotordrehmoment aufweist, wobei für das erste Sollmotordrehmoment eine kurze Ansprechzeit erforderlich ist, die zur Unterdrückung von Torsionsschwingungen dient, wobei das zweite Sollmotordrehmoment eine längere Ansprechzeit als das erste Solldrehmoment aufweist, wobei für das zweite Solldrehmoment eine Zeitverzögerung mittels eines Filters (19) derart durchgeführt wird, dass das von dem Filter (19) ausgegebene zweite Sollmotordrehmoment zumindest um eine Zeitdauer verlängert wird, die länger als eine Ansprechzeit des zweiten Sollmotordrehmoments ist, das entsprechend eines Gaspedalöffnungsgrades definiert ist, und
das Motorsteuerungsverfahren umfasst:

Berechnung eines Magnetflussstromsollwerts auf der Basis des Sollmotordrehmoments, wenn der Wechselspannungssollwert auf der Basis des Sollmotordrehmoments berechnet wird;
Berechnung eines Drehmomentstromsollwerts auf der Basis des Sollmotordrehmoments und des Magnetflussstromsollwerts; und
eine Ansprechzeit des Drehmomentstromwerts auf den Drehmomentstromsollwert schneller ist als die des Magnetflussstromwerts auf den Magnetflussstromsollwert.

**Revendications**

1. Appareil de commande de moteur comprenant :

un inverseur (3) configuré pour appliquer une tension à un moteur à induction CA (1) qui doit être entrainé ;
un calculateur de valeur d'instruction (13, 18) configuré pour calculer une valeur d'instruction d'une tension CA sortie par l'inverseur (3) sur la base d'un couple moteur cible du moteur à induction CA (1) ; et
un contrôleur d'inverseur (15, 16, 12, 6) configuré pour commander l'inverseur (3) sur la base de la valeur d'instruction de la tension CA,
**caractérisé en ce que** le couple moteur cible du moteur à induction CA (1) comporte un premier couple moteur cible et un second couple moteur cible, une réponse à grande vitesse étant requise dans le premier couple moteur cible, qui est utilisé pour supprimer les vibrations de torsion, le second couple moteur cible étant une réponse à plus faible vitesse que le premier couple moteur cible, le traitement du retard étant effectué par un filtre (19) pour le second couple moteur cible, de telle sorte que le couple moteur cible en sortie du filtre (19) est retardé au moins pendant un laps de temps plus long qu'un temps de réponse du second couple moteur cible qui est défini en fonction d'un degré d'ouverture de l'accélérateur,

dans lequel le calculateur de valeur d'instruction (13, 18) est configuré pour calculer, sur la base du couple moteur cible, une valeur d'instruction de courant de flux magnétique, et le calculateur de valeur d'instruction (13, 18) est configuré pour calculer, sur la base du couple moteur cible et de la valeur d'instruction de courant de flux magnétique, une valeur d'instruction de courant de couple, dans lequel la valeur d'instruction de courant de flux magnétique et la valeur d'instruction de courant de couple sont obtenues en convertissant un courant CA triphasé dans un système de cordonnées bi-axial orthogonal synchronisé avec une fréquence angulaire de source de puissance, et

dans lequel la sensibilité de réaction au courant de la valeur de courant de couple à la valeur d'instruction du courant de couple est plus rapide que celle de la valeur de courant de flux magnétique à la valeur d'instruction de courant de flux magnétique.

2. Appareil de commande de moteur selon la revendication 1,
dans lequel le calculateur de valeur d'instruction (13, 18) calcule, sur la base du couple moteur cible, la valeur d'instruction de courant de couple dans lequel la sensibilité de réaction au courant est plus rapide que celle de la valeur d'instruction de courant de flux magnétique, et le calculateur de valeur d'instruction (13, 18) calcule une valeur d'instruction de courant de couple après correction en corrigeant la valeur d'instruction de courant de couple calculée sur la base de la valeur d'instruction de courant de flux magnétique.

3. Appareil de commande de moteur selon la revendication 1 ou 2, comprenant en outre :

un calculateur de valeur de limiteur (13) configuré pour calculer une valeur de limiteur sur la base d'au moins une valeur d'instruction de la valeur d'instruction de courant de flux magnétique et de la valeur d'instruction de courant de couple, et la valeur maximum de la valeur d'instruction de courant ; et
un limiteur de valeur d'instruction de courant (30, 40, 50, 60, 70, 80, 90) configuré pour limiter la valeur d'instruction de courant de flux magnétique ou la valeur d'instruction de courant de couple sur la base de la valeur du limiteur.

4. Appareil de commande de moteur selon l'une quelconque des revendications 1 à 3,
dans lequel le calculateur de valeur d'instruction (13, 18) fixe la valeur d'instruction de courant de flux magnétique à une valeur prédéterminée plus grande que zéro, ou supérieure, même dans le cas où le couple de moteur cible est un couple prédéterminé ou inférieur.

5. Procédé de commande de moteur pour commander un moteur à induction CA (1) par le calcul d'une valeur d'instruction d'une tension CA sortie par un inverseur (3) sur la base d'un couple de moteur cible du moteur à induction CA (1) et la commande de l'inverseur (3) sur la base de la tension CA,
**caractérisé en ce que** le couple moteur cible du moteur à induction CA (1) comporte un premier couple moteur cible et un second couple moteur cible, une réponse à grande vitesse étant requise dans le premier couple moteur cible, qui est utilisé pour supprimer les vibrations de torsion, le second couple moteur cible étant une réponse à plus faible vitesse que le premier couple moteur cible, le traitement du retard étant effectué par un filtre pour le second couple moteur cible, de telle sorte que le second couple moteur cible en sortie du filtre (19) est retardé au moins pendant un laps de temps plus long qu'un temps de réponse du second couple moteur cible qui est défini en fonction d'un degré d'ouverture de l'accélérateur, et
le procédé de commande du moteur comprend :

le calcul d'une valeur d'instruction de courant de flux magnétique, sur la base du couple moteur cible, lorsque la valeur d'instruction de la tension CA est calculée sur la base du couple moteur cible ;
le calcul d'une valeur d'instruction de courant de couple, sur la base du couple de moteur cible et de la valeur d'instruction de courant de flux ; et
la sensibilité de réaction au courant de la valeur de courant de couple à la valeur d'instruction du courant de couple est plus rapide que celle de la valeur de courant de flux magnétique à la valeur d'instruction de courant de flux magnétique.

FIG. 1

FIG. 2

FIG. 3

EP 2 940 858 B1

FIG. 4

FIG. 5

FIG. 6

FIG. 7

FIG. 8

EP 2 940 858 B1

FIG. 9

FIG. 10

FIG. 11

FIG. 12

FIG. 13

FIG. 14

EP 2 940 858 B1

FIG. 15

$T_1{}^*$ → FILTER (19) → (+) → CURRENT COMMAND VALUE ARITHMETIC UNIT (13) → $i_{\gamma s}{}^{**}$, $i_{\delta s}{}^{**}$ → LOWER LIMIT LIMITER (60) → TORQUE RESPONSE IMPROVING ARITHMETIC UNIT (18) → $i_{\gamma s}{}^*$, $i_{\delta s}{}^*$ → $G_c(s)$ → $G_p(s)$ →

$T_2{}^*$ → (+)

FIG. 16

EP 2 940 858 B1

FIG. 17

FIG. 18

$T_1{}^*$ → FILTER (19) → + + → CURRENT COMMAND VALUE ARITHMETIC UNIT (13) → LOWER LIMIT LIMITER (70) → $i_{\gamma s}{}^*$ → $G_c(s)$ → $G_p(s)$ →

$T_2{}^*$ →

TORQUE RESPONSE IMPROVING ARITHMETIC UNIT (18) → $i_{\delta s}{}^*$

EP 2 940 858 B1

32

FIG. 19

EP 2 940 858 B1

FIG. 20

EP 2 940 858 B1

FIG. 21

**REFERENCES CITED IN THE DESCRIPTION**

**Patent documents cited in the description**

- US 2002190683 A

**Non-patent literature cited in the description**

- Practical motor drive control system design and its practice. 191-230